# EUROPÄISCHE PATENTSCHRIFT

(11) **EP 1 002 228 B1**
(45) Veröffentlichungstag und Bekanntmachung des Hinweises auf die Patenterteilung: **17.03.2004**
(21) Anmeldenummer: 98941335.6
(22) Anmeldetag: 15.07.1998
(51) Int. Cl.: G01N 27/00, G03F 7/20, G11B 9/00, G01B 7/34

(54) **VERFAHREN ZUM AUFTRAGEN ODER ABTRAGEN VON MATERIALIEN**
METHOD FOR APPLYING OR REMOVING MATERIAL
PROCEDE POUR APPLIQUER OU ELIMINER DES MATERIAUX

(30) Priorität: 05.08.1997 DE 19733795
(43) Veröffentlichungstag der Anmeldung: 24.05.2000
(73) Patentinhaber: Institut für Festkörper- und Werkstofforschung Dresden e.V., 01069 Dresden (DE); NaWoTec GmbH, 64380 Rossdorf (DE)
(72) Erfinder: KOOPS, Hans, Wilfried, Peter, D-64372 Ober-Ramstadt (DE); KRETZ, Johannes, D-80538 München (DE); BRÜCKL, Hubert, D-33613 Bielefeld (DE)
(86) Internationale Anmeldenummer: PCT/EP1998/004403
(87) Internationale Veröffentlichungsnummer: WO 1999/008099

(56) Entgegenhaltungen:
- EP-A- 0 376 045
- EP-A- 0 736 746
- US-A- 5 416 331
- US-A- 5 440 122
- PATENT ABSTRACTS OF JAPAN vol. 018, no. 078 (P-1689), 8. Februar 1994 & JP 05 288714 A (SEIKO INSTR INC), 2. November 1993
- GAO H J ET AL: "A new type of organometallic system for high density data storage by scanning tunneling microscopy" CHEMICAL PHYSICS LETTERS, 4 JULY 1997, ELSEVIER, NETHERLANDS, Bd. 272, Nr. 5-6, Seiten 459-462, XP002088694 ISSN 0009-2614
- MCCORD M A ET AL: "DIRECT DEPOSITION OF 10-NM METALLIC FEATURES WITH THE SCANNING TUNNELING MICROSCOPE" JOURNAL OF VACUUM SCIENCE AND TECHNOLOGY: PART B, Bd. 6, Nr. 6, November 1988, Seiten 1877-1880, XP000027544 in der Anmeldung erwähnt
- "IN SITU SHARPENING OF ATOMIC FORCE MICROSCOPE TIPS" IBM TECHNICAL DISCLOSURE BULLETIN, Bd. 38, Nr. 2, 1. Februar 1995, Seite 637 XP000502713
- LEE K L ET AL: "SUBMICRON SI TRENCH PROFILING WITH AN ELECTRON-BEAM FABRICATED ATOMIC FORCE MICROSCOPE TIP" JOURNAL OF VACUUM SCIENCE AND TECHNOLOGY: PART B, Bd. 9, Nr. 6, 1. November 1991, Seiten 3562-3568, XP000268567

## Beschreibung

### Technisches Gebiet

Die Erfindung betrifft ein Verfahren zum Auftragen oder Abtragen von Materialien auf beziehungsweise von Substraten unter Verwendung eines bei Atmosphärendruck betriebenen Rastersondenmikroskops (SXM), das ein Rastertunnelmikroskop (STM), ein Rasterkraftmikroskop (SFM) oder ein Rasternahfeldmikroskop (SNOM) sein kann.

### Stand der Technik

Es ist bereits bekannt, Rastertunnelmikroskope zur Lithographie einzusetzen. Dabei werden vorgelegte Lackschichten oder Metallflächen an Luft durch Ionen oder Elektronen belichtet oder oxidiert und so feine Strukturen erzeugt (Matsumoto, M. Ishii, K. Segawa: J. Vac. Sci. Technol. B 14(2), 1331 (1996); E.A. Dobisz, C.R.K. Marrian: Appl. Phys. Lett. 58(22), 2526 (1991)). Bei ausreichendem Wassergehalt in der Umgebungsluft, das heißt bei einer Feuchte über 15 % und je nach der Polarität der Spitze, erfolgt die Belichtung mit Hydronium- oder Hydroxyl-Ionen (H.W.P. Koops, E.A. Dobisz, J. Urban: J. Vac. Sci. Technol. B 15(4), 1369 (1997); E.A. Dobisz, H.W.P. Koops, F.K. Perkins: Appl. Phys. Lett. 68(22), 3653 (1996); A.R. Anway, Field Ionization of Water, The Journal of Chemical Physics, Vol.50, (1969) 2012-2021). In trockener Umgebungsluft können mit Elektronen Belichtungen erzielt werden.

Es ist auch bekannt, Rastertunnelmikroskope zum Auftragen von Material auf einem Substrat einzusetzen. Hierbei werden auf dem Substrat Atome des Substrats verlagert, oder der Materialauftrag erfolgt durch Übertragen von Sondenmaterial mittels Feldverdampfung (R. Gomer, IBM J. Res. Develop. 30, 428 (1986)).

Bekannt ist es auch, Rastertunnelmikrcskope für hochauflösende Strukturierungsprozesse und für Informationsspeicherungsprozesse einzusetzen (S.C. Minne, Ph. Flueckinger, H.T. Soh, C.F. Quate: J. Vac. Sci. Technol. B 13, 1380 (1995)).

Es ist auch bereits bekannt, Rastertunnelmikroskope zur Depositionslithographie unter Vakuumbedingungen zu betreiben. Hierbei wird aus einer Knudsen Zelle, das heißt, einem Reservoir mit Drosselung des Zulaufes durch eine Kanüle oder Düse, Material zugeführt (M.A. McCord, D.P. Kern, T.H.P. Chang: J. Vac. Sci. Technol. B 6, 1877 (1988); E.E. Ehrichs, W.F. Smith, A.L. DeLozanne: Ultramicroscopy 42-44, 1438 (1992)). Eingesetzt werden organometallische Verbindungen und Substrate mit unvorbereiteten Oberflächen.

Weiterhin ist es bekannt, mit einem STM oder SFM das Verfahren der Elektrolyse durchzuführen (JP 06 297252 A, JP 05 288714 A). Dabei werden die in einem flüssigen Elektrolyten enthaltenen Ionen durch das elektrische Feld auf einer in den Elektrolyten gelegten Probe fixiert.

Dem Stand der Technik haftet eine Reihe von Nachteilen an. Besonders nachteilig ist, daß unter Vakuumbedingungen gearbeitet werden muß, was einen hohen apparativen und zeitlichen Aufwand erfordert. Nachteilig ist auch die wegen dem großen Kohlenstoffgehalt meist unzureichende Leitfähigkeit der Deponate. Da die bekannte Verfahrensweise ein serielles Verfahren ist, handelt es sich um ein relativ langsames Verfahren. Außerdem sind nur kleine Flächen beschreibbar, typischerweise maximal 100 µm x 100 µm. Nachteilig ist auch der hohe Sondenverbrauch.

### Darstellung der Erfindung

Der Erfindung liegt die Aufgabe zugrunde, ein Verfahren zu schaffen, welches ein effektives Auftragen oder Abtragen von Materialien auf beziehungsweise von Substraten unter Verwendung eines bei Atmosphärendruck betriebenen Rastersondenmikroskops ermöglicht.

Das Verfahren ist dadurch gekennzeichnet, daß das Substrat in einen auf dem x-y-Tisch befindlichen Trog eines Rastersondenmikroskops (SXM), das ein Rastertunnelmikroskop, ein Rasterkraftmikroskop oder ein Rasternahfeldmikroskop sein kann, eingelegt wird und der Trog mit einem gasförmigen Medium bis zu einem solchen Pegel aufgefüllt wird, daß die Oberseite des Substrats mit einer dünnen, aus mindestens einer Monolage des Mediums bestehenden Schicht bedeckt ist. Danach wird zum Deponieren eines strukturierten Niederschlags aus dem Medium oder zum strukturierenden Abätzen der Oberfläche des Substrats die Mikrospitze des SXM in die Schicht eingetaucht und mit einer elektrischen Spannung oder mit Spannungspulsen gespeist.

Als gasförmiges Medium werden erfindungsgemäß organometallische oder andere anorganischen und organischen Verbindungen verwendet.

Erfindungsgemäß kann die Zufuhr des Mediums mengenmäßig gesteuert vorgenommen werden. Dies kann zweckmäßig unter Ausnutzung von zwischen der umgebenden Luft und dem Medium bestehenden Schwere- und Dichteunterschieden oder mittels Pumpe und gesteuertem Ventil durchgeführt werden. Hierbei wird die Luft im Trog bei der Zufuhr des gasförmigen Mediums, das ein größeres Molekulargewicht als die Luft hat, unterschichtet.

Für eine Überwachung des Mediumpegels kann zweckmäßigerweise ein thermoelektrisches Fühlerarray oder ein Reflexionsinterferometer, bestehend aus Lichtquelle, Strahlführung, Zeilendetektor und Auswerteelektronik, oder ein Totalreflektor mit zeilenförmigem Detektor verwendet werden.

Erfindungsgemäß kann das Medium während dem Erzeugen des strukturierten Niederschlags oder dem strukturierenden Abätzen gewechselt werden.

Zweckmäßigerweise werden die während dem strukturierenden Abätzen anfallenden Ätzprodukte mit einem Spülmedium von der Oberfläche des Substrats abtransportiert.

Zum Auftragen oder Abtragen größerer Strukturfelder und zum dreidimensionalen Aufbau von Nanostrukturen am SXM können erfindungsgemäß eine oder mehrere SXM-Sonden-Cantilever mit mehreren Mikrospitzen eingesetzt werden, wobei durch einen in jede Mikrospitze eingebauten Widerstand oder durch eine aktive Stromsteuerung der einzelnen Mikrospitze der gleichzeitige Einsatz aller Mikrospitzen gewährleistet wird.

Beim Anwenden eines SXM-Sonden-Cantilevers mit mehreren Mikrospitzen zusätzlich eine Prüfspitze verwendet wird, die zur Positionsführung für diesen SXM-Sonden-Cantilever während des Auf- oder Abtragens des Materials, zum Betrachten größerer Strukturfelder und/oder zum dreidimensionalen Bearbeiten von Nanostrukturen eingesetzt wird.

Als organometallische Verbindung können nach der Erfindung
Me₂Au(tfac) (Dimethyl-gold-trifluoro-acetylacetonat),
Me₂Au(hfac) (Dimethyl-gold-hexafluoro-acetylacetonat),
Me₂Au(acac) (Dimethyl-gold-acetylacetonat),
CpPt(CH₃)₃ (Cyclopentadienyl-platin-trimethyl),
Mo(CO)₆ (Molybdänhexacarbonyl) oder
Cu(hfac)₂ (Kupfer-dihexafluoro-acetylacetonat)
verwendet werden.

Als anorganische Verbindung können erfindungsgemäß
TiJ₄ (Titanjodit) oder
TiCl₄ (Titanchlorid)
verwendet werden.

Im Falle des Abätzens können als Medium
XeF₂ (Xenondifluorid),
TiJ₄ (Titanjodit),
TiCl₄ (Titanchlorid),
WF₆ (Wolframhexa-fluorid) oder
andere hochfluorierte oder halogenierte Verbindungen verwendet werden.

Gegenstand der Erfindung ist auch die Anwendung des Verfahrens zur Charakterisierung der Geometrie und Erneuerung oder. der Herstellung von Mikrospitzen von SXM-Cantilevern, wobei im Trog auf einem Substrat eine mit einer Leiterbahn elektrisch kontaktierte Spitze angeordnet wird, mit deren Hilfe die Geometrie der Mikrospitze rastermikroskopisch abgetastet wird, oder mit deren Hilfe eine Erneuerung oder die Herstellung einer Mikrospitze dadurch vorgenommen wird, daß die kontaktierte Spitze mit einer elektrischen Spannung oder mit Spannungspulsen zum Deponieren eines Niederschlags aus dem Medium auf die SXM-Sonden Cantilever gespeist wird.

Gegenstand der Erfindung ist auch die Anwendung des Verfahrens zur Speicherung von Informationen, zum Lesen von Informationen und zum Löschen von Informationen, wobei mit dem Verfahren auf den Substraten Moleküle oder Molekül-Cluster, die sich als Informationsträger eignen, zur Informationsspeicherung aufgetragen, zum Lesen von Informationen detektiert und zum Löschen von Informationen abgetragen oder umstrukturiert werden.

Hierbei können erfindungsgemäß mehrere Spitzen in gleicher aber auch in voneinander unabhängiger Weise eingesetzt, repariert oder auch gereinigt werden.

Beim erfindungsgemäßen Verfahren wird, bedingt durch die Verwendung des gasförmigen Mediums eine Zersetzung einzelner an der Oberfläche des Substrats oder der Mikrospitze des SXM adsorbierter Gasatome durchgeführt. Davon wird ein Teil, und zwar Metallatome mit Kohlenstoffresten, auf der Oberfläche des Substrats oder der Mikrospitze abgeschieden, oder es erfolgt eine Ätzung des Substrats oder der Mikrospitze.

Das erfindungsgemäße Verfahren zeichnet sich insbesondere dadurch aus, daß nicht unter aufwendigen Vakuumbedingungen gearbeitet werden muß. Vorteilhaft ist auch, daß gut leitfähige Deponate verwendbar sind und daß durch ein schnelles Wechseln der Precursoren in einfacher Weise nacheinander unterschiedliche Prozesse, wie Deposition und Ätzen; durchführbar sind. Ein weiterer Vorteil besteht darin, daß bei der Durchführung des Verfahrens verschlissene Sonden mit dem gleichen Verfahren wieder regeneriert werden können.

Nachstehend ist die Erfindung an Hand von Ausführungsbeispielen näher erläutert. In der zugehörigen Zeichnung zeigen in schematischer Darstellungsweise:
Fig. 1: die Arbeitsanordnung bei einem herkömmlichen Rastertunnelmikroskop,
Fig. 2: eine prinzipielle Arbeitsanordnung zur Durchführung des erfindungsgemäßen Verfahrens unter Verwendung eines Rastersondenmikroskops,
Fig. 3: Anordnungen zur Niveauregulierung und zum Wechseln der Medien zur Durchführung des erfindungsgemäßen Verfahrens an einem Rastersondenmikroskop,
Fig. 4: eine Anordnung mit mehreren Mikrospitzen und einer Prüfspitze zur Durchführung des Verfahren während : einer Deposition oder Ätzung, an größeren Strukturfeldern und zum dreidimensionalen Aufbau von Nanostrukturen,
Fig. 5: eine Anordnung zur Niveauregulierung und zum Wechseln der Medien zur Durchführung des erfindungsgemäßen Verfahrens beim Ätzen mit einem Rastersondenmikroskop,
Fig. 6: die Arbeitsanordnung für eine in-situ-Reparatur einer Mikrospitze eines Rastersondenmikroskops,
Fig. 7: ein Flußdiagramm der Arbeitsstufen für die Charakterisierung von Mikrospitzen und für die Reparatur eines Schreib-Lese-Löschkopfes eines Gerätes zur Informationsspeicherung, welches auf der Basis des erfindungsgemäßen Verfahrens arbeitet.

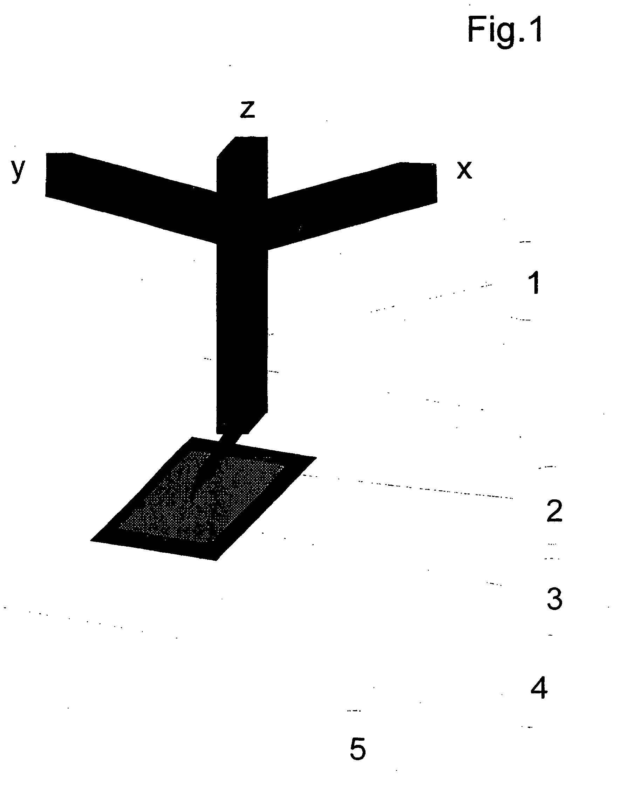

Die in Fig. 1 gezeigte Arbeitsanordnung eines herkömmlichen, bei Atmosphärendruck betriebenen Rastertunnelmikroskops, weist eine von drei Piezomotoren in der x-, y-, und z-Richtung bewegbare Sonde 1 auf, die am unteren Ende einen oder mehrere Cantilever 2 mit einer oder mehreren Mikrospitzen trägt, mit denen ein Substrat 3, das auf einem Substrathalter 4 gehaltert ist, abgetastet werden kann. Der Substrathalter 4 ist auf dem in x-y-Richtung beweglichen x-y-Tisch 5 befestigt.

Ein derartiges Rastertunnelmikroskop wird von einer in der Zeichnung nicht dargestellten Signalelektronik mit Bildspeicher, Bild-Wiedergabe und -Verarbeitung sowie mit Spitzenbewegung und Probenbewegung gesteuert. Die Elektronik besitzt zusätzlich einen oder mehrere Kanäle, mit welchen entsprechend einer rechnererstellten Vorlage die Mikrospitzen geführt und zur Abbildung, Beschichtung oder Ätzung des Substrats die verschiedenen Mikrospitzen mit verschiedenen konstanten oder auch zeitlich veränderlichen und gepulsten Spannungen in dem Prozeß angepaßter Höhe und Dauer beaufschlagt werden können.

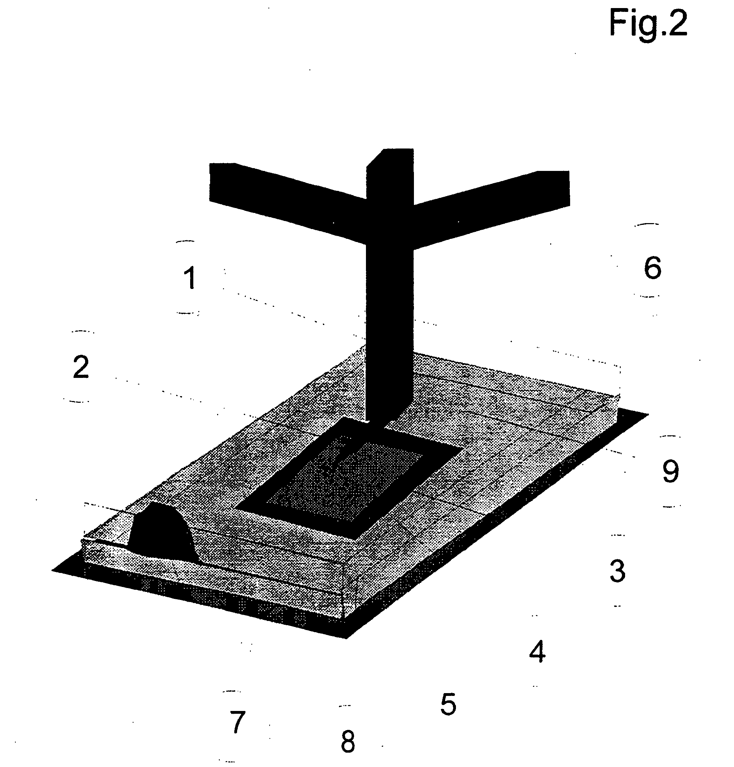

Bei der in Fig. 2 dargestellten Arbeitsanordnung zur Durchführung des erfindungsgemäßen Verfahrens befinden sich das Substrat 3 auf dem Substrathalter 4 in einem Trog 6, der auf dem x-y-Tisch 5 eines Rastersondenmikroskops befestigt ist. In den Trog 6 wird bei Atmosphärendruck als Medium 7 Dimethylgoldacetylacetonat eingebracht, das aus schweren organometallischen Molekülen mit einem Molekulargewicht von 380 besteht und einen geringen Dampfdruck von 40 mTorr besitzt. Dadurch verdrängt der sich bildende schwere Dampf 9 des Mediums 7 die Luft (Molekulargewicht O₂=32) am Boden des Troges 6 und beschichtet im Laufe der Zeit den Boden des Troges 6 bis zu einer Höhe 8, bei der einige Monolagen des Dampfes 9 das Substrat 3 überziehen. In diese Schicht über dem Substrat 3 taucht die Mikrospitze des Cantilevers 2 ein, mit der Wasserionen emittiert werden. Durch den Einschlag der Ionen werden die auf der Oberfläche des Substrats 3 adsorbierten Dampfmoleküle zerschlagen, und im Fall der Deposition wird ein bleibendes Deponat auf dem Substrat 3 gebildet.

Im Fall des Ätzens entsteht ein Ätzprodukt, das durch entsprechende Auswahl einer ätzenden Dampfkomponente möglichst gasförmig ist, damit es mittels einer Dampfbewegung abtransportiert werden kann.

Zur Prozeßsteuerung kann es vorteilhaft sein, das Substrat 3 und das Medium 7 auf gleiche oder verschiedene Temperatur zu bringen. Dies kann vorteilhaft durch Heizelemente unter dem Substrat 3 und mit einem getrennt angeordneten Medium-Reservoir realisiert werden.

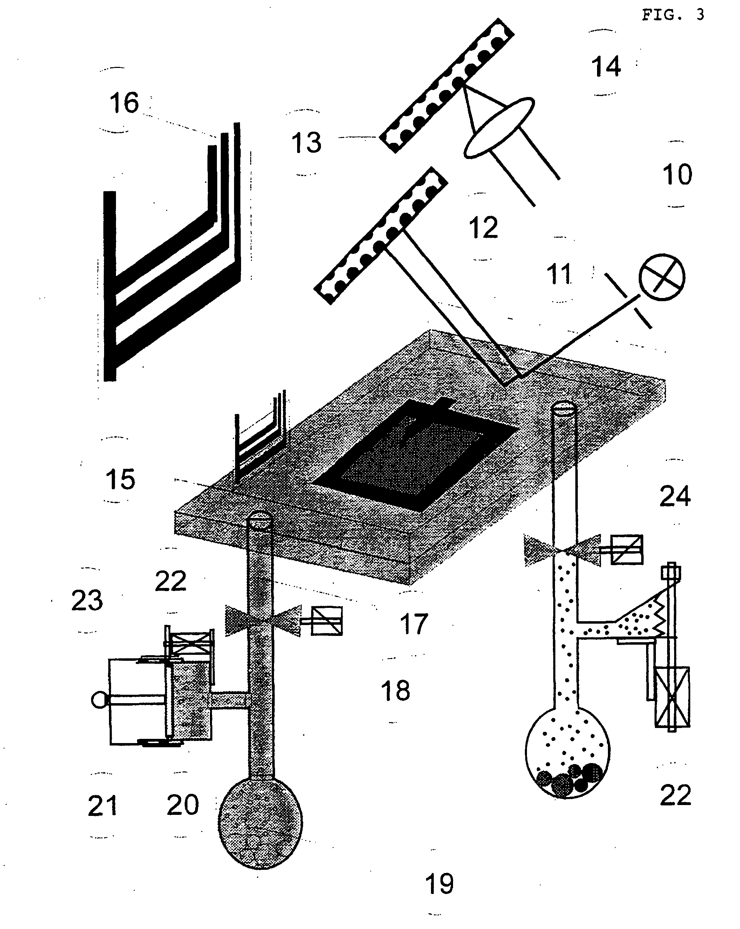

Zur Bestimmung der Endpunkte des vollständigen Dampfwechsels wird mit Vorteil eine Niveaumessung des Dampfpegels eingesetzt. Gemäß Fig. 3 kann die Niveaumessung ausgeführt werden:
- durch Messung der Wärmeleitfähigkeit an miniaturisiert in verschiedenen Höhen an der Innenseite des Troges 6 aufgebrachten Widerständen 15 einer Wheatstoneschen Meßbrückenschaltung 16 oder,
- bei höherer Präzision, mittels einer Lichtquelle 10 unter Ausnützung der Totalreflexion am Übergang zum dichteren Medium oder
- durch Auswertung der Zweistrahlinterferenz.

Eine Zweistrahlinterferenz entsteht, wenn der von einer Lichtquelle 10 ausgehende Lichtstrahl 11 teilweise an der Dampfschicht reflektiert wird und teilweise in die Dampfschicht eindringt und dann an der Unterkante der Dampfschicht, nämlich am Boden des Troges 6 oder auf dem Substrat 3 reflektiert wird und beim Austritt mit dem an der Oberfläche reflektierten Lichtstrahl interferiert. Das Interferenzmuster entsteht durch Überlagerung der Lichtstrahlen 12, zum Beispiel mit Hilfe einer Linse 14 auf einem in deren Brennebene angebrachten Detektor 13 oder Schirm. Aus dem Verlauf der Intensität des Interferenzmusters kann dann auf die Schichtdicke der Dampfschicht geschlossen werden. Bei Messung mit Totalreflexion und bei der Auswertung der Intensität der Interferenz wird mit Vorteil eine Zeilenkamera mit Rechnersauslesung als ortsauflösendem Detektor 13 eingesetzt.

Um den Prozeß der Dampfzufuhr zu beschleunigen ist es vorteilhaft - wie in Figur 3 dargestellt - am Trog 6 mindestens ein Reservoir 19 für das Medium vorzusehen. Hierzu wird eine Ausgleichsdampfmenge 20 über ein Rohr 17 und ein Ventil 18 mittels eines Kolbens 21, der in einem Zylinder 23 durch einen Stellmotor 22 betätigt wird, in oder aus dem Trog 6 gefördert. Dabei können mit Vorteil die Ventilstellung, der Kolbenstand und die Temperatur des Substrats 3 rechnergesteuert eingestellt werden. Mit dieser Vorrichtung oder einer ähnlichen Ausgleichsvolumen-Steuerung, die gemäß Fig. 3 mit einem Federbalg 24 und einem Stellmotor 22 aufgebaut ist, kann der Dampf zur Deposition oder zum Ätzen gesteuert und schnell entfernt und zugeführt werden, und es kann auch von einem zu weiteren Medien 7 gewechselt werden.

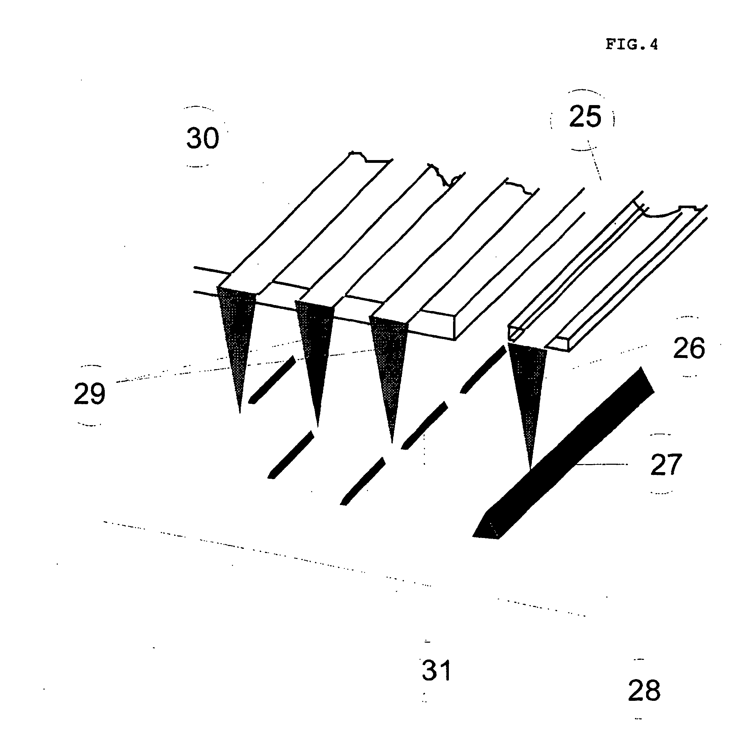

Bei der in Fig. 4 dargestellten Anordnung zur Durchführung des Verfahren an größeren Strukturfeldern und zum dreidimensionalen Aufbau von Nanostrukturen sind mehrere über separate Leiterbahnen 30 unabhängig ansprechbare Mikrospitzen 29 eingesetzt. Das ermöglicht eine getrennte Ansteuerung zum Beispiel zur Erzielung einer flächigen punktweisen strukturierten Belegung 31 und Ätzung in Schreibfeldern auf einem Substrat 28 bei gleichzeitiger Führung durch eine an einer Leiterbahn 25 im Lesemodus betriebene Mikrospitze 26, mit der beispielsweise eine vorgegebene Spur 27 durch Echtzeit-Signalauswertung und Positionskorrektur verfolgt wird.

Bei Anwendung eines beispielsweise quadratischen Spitzenarrays mit 100 getrennt ansprechbaren und auslesbaren Mikrospitzen 29, die in einem festen oder variablen Rastermaß angeordnet sind, können damit in einer Position strukturierte Deponate gleichzeitig erzeugt werden.

Zur Fertigung derartiger Mikrospitzen mit dem Verfahren der Nanolithographie mit Deposition im Korpuskularstrahlgerät können getrennte ansprechbare Mikrospitzen mit 100 nm Abstand in einem Linienarray und auch in einem quadratischen Array aufgebaut'werden. Da die Ionen emittierende Mikrospitzen aus dem Taylor-Cone aus Wasser am Ende der vorgelegten Spitze gebildet werden, legen die vorgelegten Mikrospitzen durch ihre Position nur den Ort der Deposition fest. Durch Vorgabe der Spannung gelingt es auch mit auf gleicher Spannung befindlichen Mikrospitzen das Muster der Verteilung der vorliegenden Mikrospitzen mit ihren Abständen zu deponieren und zu reproduzieren. Gegebenenfalls muß pro Mikrospitze ein den Emissionsstrom begrenzender Widerstand in den Fuß der Mikrospitze eingebaut werden, um alle Mikrospitzen bei gleicher Spannung gleichmäßig Ionen emittieren zu lassen.

Ein so gefertigter Spitzenarray kann mit Vorteil für die Fertigung von Photonischen Kristallen und andere gitterartigen Strukturen, wie rechnererzeugten Hologrammen eingesetzt werden.

Für die Informationsspeicherung bedeutet das bei 10 kHz Grenzfrequenz der Cantilever eine mögliche Lesegeschwindigkeit von 1 Mbit/s. Ist eine Informationseinheit in 0,1 ms deponiert, so ist das auch die Schreibgeschwindigkeit der Anordnung. Derzeit wird 1 ms als Deponierzeit benötigt. Damit ist für die Informationsspeicherung eine Schreibgeschwindigkeit von 100 Kbit/s erreichbar.

Mit dem erfindungsgemäßen Verfahren kann auch Material mittels Ätzen abgetragen werden. Dies ist vorteilhaft für die Reinigung der zu belegenden Substratoberflächen und Mikrospitzen sowie zum Entfernen von bereits deponierten Materialien. Beispielsweise ätzt Xenondifluorid über das enthaltene Fluor bei Ionenanregung Silizium und erzeugt gasförmige Ätzprodukte.

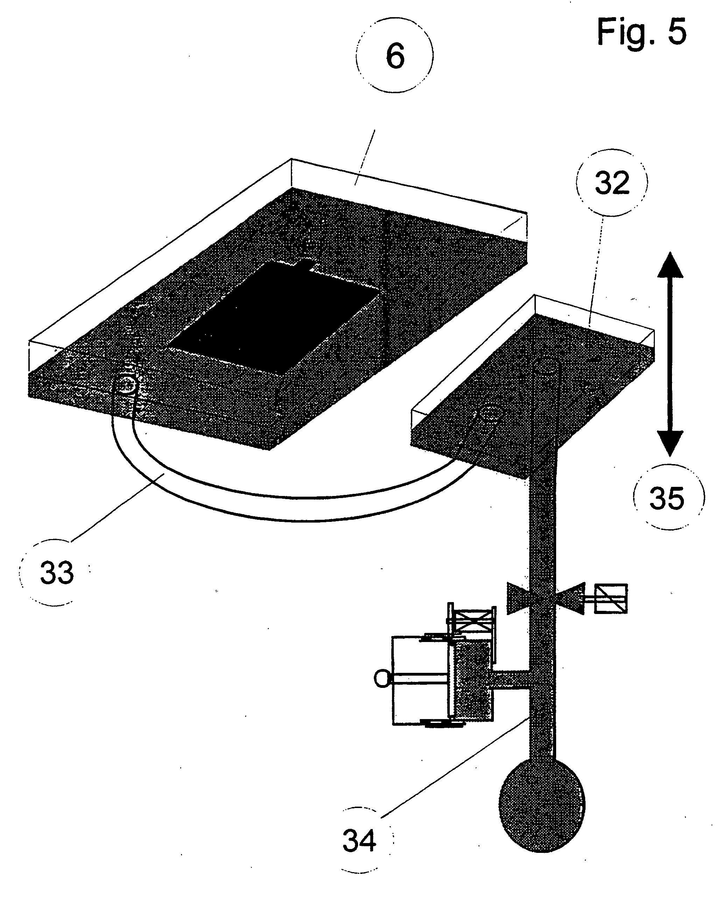

Eine für das Ätzen geeignete Anordnung, die bei Atmosphärendruck betrieben wird, ist in Fig. 5 dargestellt. Durch eine entsprechende Gasdampfführung und den Einsatz eines weiteren Troges 32, der über einen flexiblen Verbindungsschlauch 33 an den Trog 6 des Rastersondenmikroskops angeschlossen und relativ zu diesem in der angegebenen Bewegungsrichtung 35 verstellbar ist, strömt das Ätzgas je nach Höhenunterschied zwischen Trog 6 und Trog 32 durch den Verbindungsschlauch und bewegt so den die Mikrospitze umgebenden Dampf. Damit werden die Ätzprodukte von der Mikrospitze wegbewegt. Durch den angeschlossenen Ausgleichskolben 34 mit Reservoir und Ventil kann die Ätzgaskomponente zu- oder abgeführt werden, um den Ätzprozeß zu terminieren und rechnergesteuert ablaufen zu lassen.

Mit dieser Anordnung, die mit in der Zeichnung nicht dargestellten Mitteln zur Niveaumessung ausgestattet ist und die rechnergesteuert betrieben werden kann, ist es möglich, durch Dampffluß einen Materialabtransport der Reaktionsprodukte beim Ätzen des Substrates oder der Mikrospitzen zu erreichen. Als Ätzmittel eignen sich neben dem obengenannten Xenondifluorid-Dampf auch solche festen Ätzmittel, die einen hohen Dampfdruck besitzen und schwere Atome beinhalten.

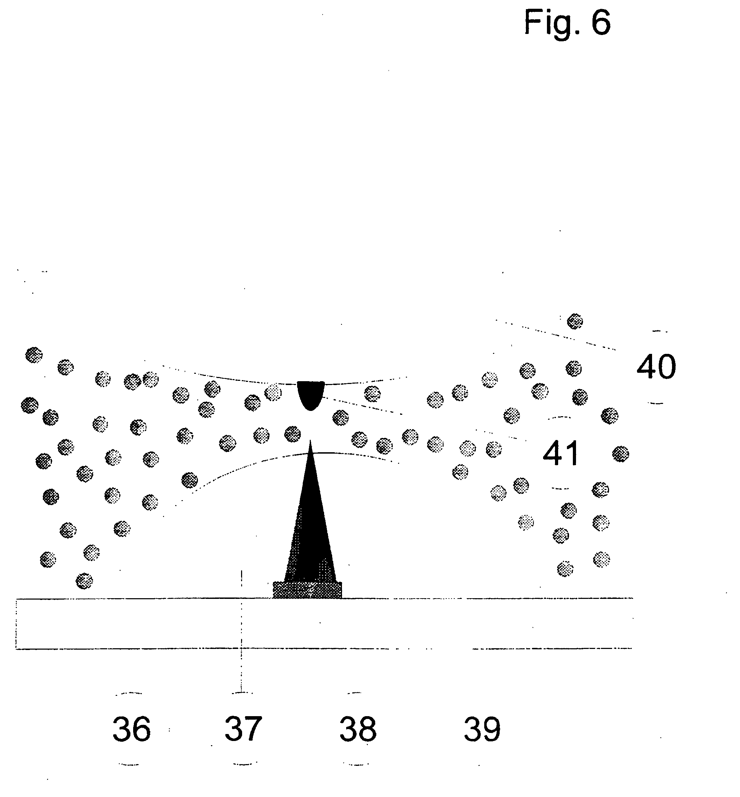

Die in Fig. 6 dargestellte Arbeitsanordnung für eine in-situ-Reparatur einer Mikrospitze eines Rastersondenmikroskops zeigt eine vorgelegte, mittels einer Leiterbahn 38 kontaktierte Mikrospitze 39. Die Leiterbahn 38 befindet sich auf einem Substrathalter 36. Die Mikrospitze 39 ist umgeben von einem hochohmigen Annäherungsdeponat 37, das es ermöglicht den höchsten Punkt der Mikrospitze 39 zu orden. Zur Herstellung einer neuen Mikrospitze hält man über diesem Punkt mit einer Arbeitsspitze 40 an und setzt mit einem kurzen Puls eine Spitze 41 auf die Arbeitsspitze 40. Mit dieser neuen Spitze 41 tastet man dann die Mikrospitze 39 wieder ab und wiederholt das Verfahren bei Änderung der Pulsdauer, der Spannung, des Dampfdruckes und der Dampfzusammensetzung durch Änderung des Partialdruckes und der Materialzusammensetzung des Mediums bis man den gewünschten feinen oder groben Spitzenradius an der Spitze 41 erzeugt hat.

Das erfindungsgemäße Verfahren kann auch zur Speicherung von Information durch Deposition von Molekülen und Molekül-Clustern und zum Löschen von Information durch Entfernen oder Umstrukturieren von Molekülen mittels einer einzelnen Mikrospitze oder mittels einer Mehrspitzenanordnung genutzt werden. Die Mikrospitzen werden dabei lokal durch eine zusätzliche Prüfspitze geführt. Das Lesen erfolgt mit derselben Mikrospitze, aber bei einer Spannung unterhalb der Reaktionsschwelle für das Schreiben oder das Löschen. Die Mikrospitzenanordnung für die Mehrspitzen-Schreib-, Lese- und Lösch-Technik kann dabei durch Depositionslithographie intern hergestellt werden. Außerdem ist mit diesem Verfahren der Schreib-Lese-Löschkopf in-situ reparierbar, und er kann zur Erhaltung der Performance des Schreib-Lese-Lösch-Speicher-Gerätes vorprogrammiert routinemäßig geprüft und repariert werden.

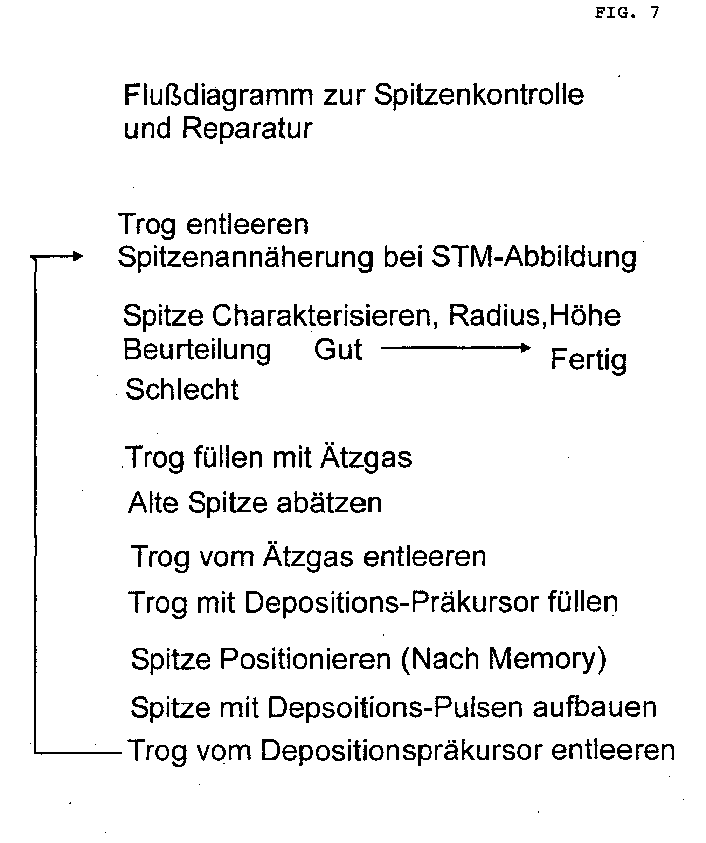

Das Flußdiagramm für den automatischen Ablauf der Charakterisierung und Reparatur für einen Schreib-Lese-Löschkopf an einem Gerät zur Informationsspeicherung, welches auf der Basis des erfindungsgemäßen Verfahrens arbeitet, gibt Fig. 7 wieder.

## Patentansprüche

1. Verfahren zum Auftragen oder Abtragen von Materialien auf bzw. von Substraten unter Verwendung eines bei Atmosphärendruck betriebenen Rastersondenmikroskops (SXM), das ein Rastertunnelmikroskop (STM), ein Rasterkraftmikroskop (SFM) oder ein Rasternahfeldmikroskop (SNOM) sein kann, wobei das Substrat (3;28) in einen auf dem x-y-Tisch (5) des SXM befindlichen Trog (6) eingelegt und dieser mit einem gasförmigen Medium (7) bis zu einem solchen Pegel aufgefüllt wird, daß die Oberseite des Substrats (3;28) mit einer dünnen, aus mindestens einer Monolage des Mediums (7) bestehenden Schicht bedeckt ist, und daß danach zum Deponieren eines strukturierten Niederschlags aus dem Medium (7) oder zum strukturierenden Abätzen der Oberfläche des Substrats (3;28) die Mikrospitze (29;39) des SXM in die Schicht eingetaucht und mit einer elektrischen Spannung oder mit Spannungspulsen gespeist wird.

2. Verfahren nach Anspruch 1, **dadurch gekennzeichnet, daß** als gasförmiges Medium (7) organometallische oder andere anorganischen und organischen Verbindungen verwendet werden.

3. Verfahren nach Anspruch 1, **dadurch gekennzeichnet, daß** die Zufuhr des Mediums (7) mengenmäßig gesteuert erfolgt.

4. Verfahren nach Anspruch 3, **dadurch gekennzeichnet, daß** die mengenmäßige Steuerung des Mediums (7) zum Substrat (3;28) unter Ausnutzung von zwischen der umgebenden Luft und dem Medium (7) bestehenden Schwere- und Dichteunterschiede vorgenommen wird, indem die Luft im Trog (6) bei der Zufuhr des gasförmigen Mediums (7), das ein größeres Molekulargewicht als die Luft hat, unterschichtet wird.

5. Verfahren nach Anspruch 3, **dadurch gekennzeichnet, daß** eine mengenmäßige Steuerung des Mediums (7) zum Substrat (3;28) mittels Pumpe und gesteuertem Ventil (18) vorgenommen wird.

6. Verfahren nach Anspruch 1, **dadurch gekennzeichnet, daß** für eine Überwachung des Mediumpegels ein thermoelektrisches Fühlerarray oder ein Reflexionsinterferometer, bestehend aus Lichtquelle (10), Strahlführung, Zeilendetektor (13) und Auswerteelektronik, oder ein Totalreflektor mit zeilenförmigem Detektor (13) verwendet wird.

7. Verfahren nach Anspruch 1, **dadurch gekennzeichnet, daß** das Medium (7) während dem Erzeugen des strukturierten Niederschlags oder dem strukturierenden Abätzen gewechselt wird.

8. Verfahren nach Anspruch 1, **dadurch gekennzeichnet, daß** die während dem strukturierenden Abätzen anfallenden Ätzprodukte mit einem Spülmedium von der Oberfläche des Substrats (3;28) abtransportiert werden.

9. Verfahren nach Anspruch 1, **dadurch gekennzeichnet, daß** zum Auftragen oder Abtragen größerer Strukturfelder und zum dreidimensionalen Aufbau von Nanostrukturen am SXM eine oder mehrere SXM-Sonden-Cantilever mit mehreren Mikrospitzen (29) eingesetzt werden, wobei durch einen in jede Mikrospitze (29) eingebauten Widerstand oder durch eine aktive Stromsteuerung der einzelnen Mikrospitze (29) der gleichzeitige Einsatz aller Mikrospitzen (29) gewährleistet wird.

10. Verfahren nach Anspruch 9, **dadurch gekennzeichnet, daß** beim Anwenden eines SXM-Sonden-Cantilevers mit mehreren Mikrospitzen (29) zusätzlich eine Prüfspitze (26) verwendet wird, die zur Positionsführung für diesen SXM-Sonden-Cantilever während des Auf- oder Abtragens des Materials; zum Betrachten größerer Strukturfelder und/oder zum dreidimensionalen Bearbeiten von Nanostrukturen eingesetzt wird.

11. Verfahren nach Anspruch 2, **dadurch gekennzeichnet, daß** als organometallische Verbindung Me₂Au(tfac), Me₂Au(hfac), Me₂Au(acac), CpPt(CH₃)₃, Mo(CO)₆ oder Cu(hfac)₂ verwendet werden.

12. Verfahren nach Anspruch 2, **dadurch gekennzeichnet, daß** als anorganische Verbindung TiJ₄ oder TiCl₄ verwendet werden.

13. Verfahren nach Anspruch 2, **dadurch gekennzeichnet, daß** im-Falle des Abätzens als Medium (7) XeF₂, TiJ₄, TiCl₄, WF₆ oder andere hochfluorierte oder halogenierte Verbindungen verwendet werden.

14. Verfahren nach Anspruch 1 bis 13, **dadurch gekennzeichnet, daß** dieses zur Charakterisierung der Geometrie und Erneuerung oder der Herstellung von Mikrospitzen (41) von SXM-Cantilevern verwendet wird, wobei im Trog auf einem Substrat (36) eine mit einer Leiterbahn (38) elektrisch kontaktierte Spitze (39) angeordnet wird, mit deren Hilfe die Geometrie der Mikrospitze (41) rastermikroskopisch abgetastet wird, oder mit deren Hilfe eine Erneuerung oder die Herstellung einer Mikrospitze (41) dadurch vorgenommen wird, daß die kontaktierte Spitze (39) mit einer elektrischen Spannung oder mit Spannungspulsen zum Deponieren eines Niederschlags aus dem Medium (7) auf die SXM-Sonden Cantilever gespeist wird.

15. Verfahren nach Anspruch 1 bis 13, **dadurch gekennzeichnet, daß** dieses zur Speicherung von Informationen, zum Lesen von Informationen und zum Löschen von Informationen verwendet wird, wobei mit dem Verfahren auf den Substraten (3;28) Moleküle oder Molekül-Cluster, die sich als Informationsträger eignen, zur Informationsspeicherung aufgetragen, zum Lesen von Informationen detektiert und zum Löschen von Informationen abgetragen oder umstrukturiert werden.

16. Verfahren nach Anspruch 15, **dadurch gekennzeichnet, daß** beim Speichern von Informationen, beim Lesen von Informationen und beim Löschen von Informationen mehrere Spitzen (29) in gleicher aber auch voneinander unabhängiger Weise eingesetzt, repariert oder auch gereinigt werden.

## Claims

1. A process for applying or removing materials to or from substrates using a scanning probe microscope (SXM) which is operated at atmospheric pressure and which may be a scanning tunnelling microscope (STM), a scanning force microscope (SFM) or a scanning near-field optical microscope (SNOM), the substrate (3;28) being inserted into a trough (6) located on the x-y table (5) of the SXM, and said trough being filled with a gaseous medium (7) to such a level that the upper side of the substrate (3;28) is covered with a thin layer consisting of at least one monolayer of the medium (7), and that, after this, with a view to depositing a structured deposit consisting of the medium (7) or with a view to the structuring etching of the surface of the substrate (3;28), the microtip (29;39) of the SXM is submerged in the layer and fed with an electrical voltage or with voltage pulses.

2. Process according to Claim 1, **characterised in that** organometallic or other inorganic and organic compounds are used by way of gaseous medium (7).

3. Process according to Claim 1, **characterised in that** the medium (7) is supplied in a quantitatively controlled manner.

4. Process according to Claim 3, **characterised in that** quantitative control of the medium (7) supplied to the substrate (3;28) is undertaken by utilising differences in gravitational force and differences in density existing between the surrounding air and the medium (7), by the air in the trough (6) having a layer formed underneath it when the gaseous medium (7), which has a higher molecular weight than the air, is supplied.

5. Process according to Claim 3, **characterised in that** quantitative control of the medium (7) supplied to the substrate (3;28) is undertaken by means of a pump and a controlled valve (18).

6. Process according to Claim 1, **characterised in that** a thermoelectric sensor array, or a reflection interferometer consisting of light-source (10), beam control, line detector (13) and electronic evaluation circuit, or a total reflector with linear detector (13), is used for monitoring the level of the medium.

7. Process according to Claim 1, **characterised in that** the medium (7) is changed during the generation of the structured deposit or during the structuring etching.

8. Process according to Claim 1, **characterised in that** the products of etching arising during the structuring etching are transported away from the surface of the substrate (3;28) with a rinsing medium.

9. Process according to Claim 1, **characterised in that** with a view to applying or removing relatively large structural fields and with a view to three-dimensional construction of nanostructures on the SXM one or more SXM probe cantilevers with several microtips (29) are employed, the simultaneous use of all the microtips (29) being guaranteed by a resistor which is incorporated into each microtip (29) or by an active current drive of the individual microtip (29).

10. Process according to Claim 9, **characterised in that** in the course of applying an SXM probe cantilever with several microtips (29) use is additionally made of a probe tip (26) which is employed for the purpose of positional guidance for said SXM probe cantilever during the application or removal of the material, for the purpose of inspecting relatively large structural fields and/or for the purpose of three-dimensional treatment of nanostructures.

11. Process according to Claim 2, **characterised in that** Me₂Au(tfac), Me₂Au(hfac), Me₂Au(acac), CpPt(CH₃)₃, Mo(CO)₆ or Cu(hfac)₂ is used by way of organometallic compound.

12. Process according to Claim 2, **characterised in that** TiJ₄ or TiCl₄ is used by way of inorganic compound.

13. Process according to Claim 2, **characterised in that** XeF₂, TiJ₄, TiCl₄, WF₆ or other highly fluorinated compounds or halogenated compounds are used by way of medium (7) in the case of etching.

14. Process according to Claims 1 to 13, **characterised in that** said process is used for the purpose of characterising the geometry of and for the purpose of renewing or producing microtips (41) of SXM cantilevers, a tip (39) which is electrically contacted with a conductive track (38) being arranged in the trough on a substrate (36), with the aid of which tip the geometry of the microtip (41) is scanned by means of a scanning microscope, or with the aid of which tip a renewal or the production of a microtip (41) is undertaken by the contacted tip (39) being fed with an electrical voltage or with voltage pulses with a view to depositing a deposit of the medium (7) onto the SXM probe cantilevers.

15. Process according to Claims 1 to 13, **characterised in that** said process is used for the purpose of storing information, for the purpose of reading information and for the purpose of erasing information, whereby, with said process, molecules or molecular clusters on the substrates (3;28) that are suitable as information-carriers are applied for the purpose of storing information, are detected for the purpose of reading information and are removed or restructured for the purpose of erasing information.

16. Process according to Claim 15, **characterised in that** in the course of storing information, in the course of reading information, and in the course of erasing information, several tips (29) are inserted, repaired or even cleaned in identical but also mutually independent manner.

## Revendications

1. Procédé pour déposer et enlever des matériaux sur des substrats par recours à un microscope à sonde de balayage (SXM) utilisé à pression atmosphérique, qui peut être un microscope à balayage à effet tunnel (STM), un microscope à balayage de puissance (SFM) ou un microscope à balayage de champ de proximité (SNOM), le substrat (3; 28) étant placé dans une cuvette (6) située sur une table x-y (5) de SXM, cette cuvette étant remplie d'un fluide gazeux (7) jusqu'à un niveau tel que le côté supérieur du substrat (3; 28) soit recouvert d'une mince couche constituée d'au moins une monocouche du fluide (7), tandis qu'ensuite, pour déposer un dépôt structuré constitué du fluide (7) ou pour graver la surface du substrat (3; 28) de manière structurée, les micropointes (29; 39) du SXM sont enfoncées dans la couche et reçoivent une tension électrique ou des impulsions de tension électrique.

2. Procédé selon la revendication 1, **caractérisé en ce que** comme fluide gazeux (7), on utilise des composés organométalliques ou d'autres composés minéraux ou organiques.

3. Procédé selon la revendication 1, **caractérisé en ce que** l'apport de fluide (7) s'effectue en quantité contrôlée.

4. Procédé selon la revendication 3, **caractérisé en ce que** le contrôle de la quantité de l'apport de fluide (7) au substrat (3; 28) est réalisé en utilisant les différences de gravité et de densité entre l'air environnant et le fluide (7) en alimentant l'air en eau chaude dans la cuvette (6) lors de l'alimentation du fluide gazeux (7) qui possède un poids moléculaire supérieur à celui de l'air.

5. Procédé selon la revendication 3, **caractérisé en ce que** le contrôle de la quantité de l'apport de fluide (7) au substrat (3; 28) est réalisé par pompage et de vanne asservie (18).

6. Procédé selon la revendication 1, **caractérisé en ce que** pour la surveillance du niveau de liquide, il utilise une série de sondes ou un interféromètre à réflexion constitué d'une source de lumière (10), d'un guide de rayonnement, d'un détecteur linéaire (13) et d'une électronique d'évaluation ou d'un réflecteur total à détecteur linéaire (13).

7. Procédé selon la revendication 1, **caractérisé en ce que** le fluide (7) est changé pendant la création du dépôt structuré ou la gravure de structuration.

8. Procédé selon la revendication 1, **caractérisé en ce que** les produits de gravure dégagés pendant la gravure de structuration sont évacués de la surface du substrat (3; 28) par un fluide de balayage.

9. Procédé selon la revendication 1, **caractérisé en ce que** pour déposer ou enlever des zones structurées assez grandes et pour structurer des nanostructures en trois dimensions sur le SXM, il utilise une ou plusieurs sondes SXM en porte-à-faux dotées de plusieurs micropointes (29), l'utilisation simultanée de toutes les micropointes (29) étant assurée par une résistance incorporée dans chaque micropointe (29) ou par une commande active du courant qui alimente les micropointes (29) individuelles.

10. Procédé selon la revendication 9, **caractérisé en ce que** lorsqu'il utilise une ou plusieurs sondes SXM en porte-à-faux dotées de plusieurs micropointes (29), il utilise en supplément une pointe de test (26) pour guider le positionnement de ces sondes SXM en porte-à-faux pendant le dépôt ou l'enlèvement de matière pour observer des zones structurées assez grandes et/ou pour traiter des nanostructures en trois dimensions.

11. Procédé selon la revendication 2, **caractérisé en ce que** comme composé organométallique, il utilise du Me₂Au(tfac), Me₂Au(hfac), du Me₂Au(acac), du CpPt(CH₃)₂, du Mo(CO)₆ ou du Cu(hfac)₂.

12. Procédé selon la revendication 2, **caractérisé en ce que** comme composé organométallique, il utilise du TiI₄ ou du TiCl₄.

13. Procédé selon la revendication 2, **caractérisé en ce que** dans le cas de la gravure, il utilise comme fluide (7) du XeF₂, du Til₄, du TiCl₄, du WF₆ ou d'autres composés fortement fluorés ou halogénés.

14. Procédé selon les revendications 1 à 13, **caractérisé en ce qu'**il est utilisé pour **caractériser** la géométrie et renouveler ou réaliser des micropointes (41) de porte-à-faux de SXM, une pointe (39) mise en contact électrique avec une piste conductrice (38) étant disposée dans la cuvette et permettant de palper par microscopie à balayage la géométrie de la micropointe (41) ou de renouveler ou réaliser une micropointe (41) en délivrant à la pointe (39) en contact électrique une tension électrique ou des impulsions de tension pour déposer un dépôt de fluide (7) sur sondes SXM en porte-à-faux.

15. Procédé selon les revendications 1 à 13, **caractérisé en ce qu'**il est utilisé pour enregistrer des informations, pour lire des informations et pour effacer des informations, le procédé déposant sur le substrat (3; 28) des molécules ou des grappes de molécules qui conviennent comme support d'informations, les détectant sur le substrat pour lire des informations et les enlevant ou les déstructurant pour effacer des informations.

16. Procédé selon la revendication 15, **caractérisé en ce que** lors de l'enregistrement d'information, lors de la lecture d'informations ou lors de l'effacement d'informations, plusieurs pointes (29) sont utilisées, réparées ou encore nettoyées simultanément ou encore de manière indépendante.
